Europäisches Patentamt

European Patent Office

Office européen des brevets

(11) Publication number: **0 119 844**
**B1**

(12) **EUROPEAN PATENT SPECIFICATION**

(45) Date of publication of patent specification: 13.06.90

(21) Application number: **84301789.8**

(22) Date of filing: **16.03.84**

(51) Int. Cl.⁵: **G 01 S 15/02**, G 01 S 15/89, G 01 S 7/52, G 01 S 7/28, G 01 N 29/04, G 01 N 22/02, A 61 B 10/00

(54) Measuring apparatus utilizing spectrum profile.

(30) Priority: **18.03.83 JP 45396/83**

(43) Date of publication of application:
**26.09.84 Bulletin 84/39**

(45) Publication of the grant of the patent:
**13.06.90 Bulletin 90/24**

(84) Designated Contracting States:
**DE FR GB NL SE**

(56) References cited:
GB-A-2 104 218
US-A-4 052 889

IEEE TRANSACTIONS ON INFORMATION THEORY, vol.IT-12, no. 3, July 1966, pages 373-380, IEEE, New York, US; B.P. BOGERT et al.: "The heuristics of cepstrum analysis of a stationary complex echoed gaussian signal in stationary gaussian noise"

(73) Proprietor: **FUJITSU LIMITED**
1015, Kamikodanaka Nakahara-ku Kawasaki-shi Kanagawa 211 (JP)

(72) Inventor: **Miwa, Hirohide**
c/o FUJITSU LIMITED Patent Dpt., 1015 Kamikodanaka
Nakahara-ku Kawasaki-shi Kanagawa 211 (JP)

(74) Representative: **Sunderland, James Harry et al**
HASELTINE LAKE & CO Hazlitt House 28 Southampton Buildings Chancery Lane London WC2A 1AT (GB)

(56) References cited:
**IEEE TRANSACTIONS ON INFORMATION THEORY, vol.IT-18, no. 6, November 1972, pages 745-759, IEEE, New York, US; R.C. KEMERAIT et al.: "Signal detection and extraction by cepstrum techniques"**
**PROCEEDINGS OF THE IEEE, vol. 65, no. 10, October 1977, pages 1428-1443; D.G. CHILDERS et al.: "The cepstrum: a guide to processing"**
**TECHNICAL REVIEW, no. 3, 1981, pages 3-40, Naerum, DK; R.B. RANDALL et al.: "Cepstrum analysis"**

Courier Press, Leamington Spa, England.

## Description

This invention relates to measuring apparatus utilizing the spectrum profile of an incident pulse beam, such as an ultrasonic beam, on an object to be measured.

Measuring apparatus to which the present invention can be applied includes radars, sonars, ultrasonic equipment and so on. Hereafter, reference will be made to ultrasonic devices, in particular such devices for medical diagnosis, by way of example but it will be understood that the present invention can be applied to other types of equipment which employs sound waves or electro-magnetic waves for example.

Ultrasonic measuring devices are used for various purposes such as medical diagnosis, industrial crack detection and the like.

Generally, an ultrasonic pressure wave beam is generated in a transducer, which converts electric energy to acoustic energy, and is applied to an object in respect of which measurement is to be made. If the object is completely homogeneous, the beam simply travels through the object subject only to attenuation. However, in practice an object to be measured will be heterogeneous and contain various structures of different acoustic characteristics. In particular, the ultrasonic beam will be reflected at many points inside the object, generating multi-reflections of the beam.

Reflection of ultrasonic sound in a medium, for example biological tissue, is caused by a difference of acoustic impedance (defined as the product of material density and sound speed) of adjoining tissues. Hereafter a boundary between adjoining tissues of different acoustic impedances will be called a reflecting element.

As an applied ultrasonic beam, usually in the form of a pulse, travels through an object (the medium), it is affected by the acoustic characteristics of the object, such as attentuation, frequency dependency of the attenuation, reflection, diffraction, scattering and the like. As the result, the ultrasonic beam comes to carry acoustic information concerning the internal structure of the object.

The signal (information) carried by a through-transmitted beam or a reflected (echo) beam is received by a receiving transducer and converted into electric signals for processing by electronic devices to read the information carried and to display the information on a display device such as a cathode ray tube.

In a heterogeneous medium (object) such as biological tissue, which is composed of media of various kinds and structures, a propagating ultrasonic pulse wave behaves in a complicated way. A pulse beam is reflected at each reflecting element which is located in the beam path and multiplicated echoes are generated. Also, the pulse beam will be diffracted or scattered. Thus, some pulse waves generated from the pulse beam will take the same path and interfere with each other. Moreover, reflection coefficient is very frequency dependent. These factors cause serious distortion to a received echo signal and make it difficult to recover the incident spectrum of the pulse (i.e. to separate out the distortion), travelling to the reflecting element and back again, quantitatively, and information regarding the object cannot be unambiguously interpreted.

In through-transmission, some parts of the transmitted beam take different paths due to refractions and diffractions on the way before finally being received by a receiver. This causes pulse overlap and gives the quite same effects as occur with echoes or reflections.

These are serious problems and means enabling exact recovery of the incident spectrum by eliminating the distortion caused by these problems have been sought: many attempts have been made to solve these problems but to date none has been successful.

Hereafter, the term 'incident spectrum' is used to mean a received echo spectrum which does not suffer the effects of pulse overlap (scalloping) and frequency dependent reflection arising in the reflection or echo mode, or a through-transmitted pulse spectrum which does not suffer multipath effects arising in the transmission mode.

Attention is directed to the following two papers in IEEE Transactions of Information Theory, which papers contain information relating to signal detection and analysis using cepstrum techniques:

(1) Kemerait and Childers, Vol. IT—18, No. 6, November 1972, pp 745—759;

(2) Bogert and Ossanna, Vol. IT—12, No. 3, July 1966, pp 373—379.

Paper (1) discusses the derivation of the cepstrum, filtering of the cepstrum, and the derivation of the power cepstrum.

Paper (2) discusses a mathematical model of cepstrum analysis. The model consists of a detector receiving a Gaussian single complex echoed signal in Gaussian noise.

According to the present invention there is provided an apparatus utilizing the spectrum profile of a received signal wave, derived from an incident pulse signal, which may be sonic, e.g. ultrasonic, or electromagnetic, after transmission through or reflection in an object, to measure a characteristic of the object,

the apparatus including:

means for transmitting the incident pulse signal with a Gaussian or quasi-Gaussian-shaped spectrum; and

signal processing means comprising:

means for deriving the cepstrum of the received signal wave;

filtering means for separating line-like rapidly varying cepstrum components from slowly varying cepstrum components contained in the derived cepstrum;

means for recovering a power spectrum at least from said separated slowly varying cepstrum components; and

means for extracting the said characteristic from the recovered power spectrum, which comprise means for obtaining distortion indices of the recovered power spectrum, which distortion indices indicate the distortion of the spectrum from Gaussian form, and for correcting for the distortion by reference to the distortion indices.

According to the present invention there is also provided an apparatus utilizing the spectrum profile of a received signal wave, derived from an incident pulse signal, which may be sonic, e.g. ultrasonic, or electromagnetic, after transmission through or reflection in an object, to measure a characteristic of the object,

the apparatus including:

means for transmitting the incident pulse signal with a non-Gaussian spectrum; and

signal processing means comprising:

means for deriving the cepstrum of the received signal wave;

filtering means for separating line-like rapidly varying cepstrum components from slowly varying cepstrum components contained in the derived cepstrum;

means for recovering a power spectrum at least from said separated slowly varying cepstrum components; and

means for extracting the said characteristic from the recovered power spectrum, which comprise means for approximating said non-Gaussian spectrum to a product of a Gaussian distribution and a polynomial consisting of a summation of powers of frequency, and means for obtaining distortion indices of the Gaussian distribution component of the recovered power spectrum, which distortion indices indicate distortion of that component from Gaussian form, and for correcting for the distortion by reference to the distortion indices.

An embodiment of the present invention can provide a measuring apparatus for measuring quantitatively characteristics of an object, such as attentuation coefficient, heterogeneity, etc., utilizing the spectrum profile of a received signal transmitted through or reflected within the object.

Further, an embodiment of the present invention can provide a device with a signal processing means for separating distortion from the spectrum profile of the received signal, the distortion being that involved in spectrum scalloping and the frequency dependence of the indexes of reflection of reflecting elements in the object.

An embodiment of the present invention can provide a measuring and/or imaging apparatus for characteristics as mentioned above, utilizing the spectrum profile of a received signal and offering higher spatial, temporal resolution.

The conventional method of removing spectrum scalloping is statistical averaging of the spectrum spatially, temporally, at the expense of spatial/temporal resolution.

With a conventional signal processing means, such as homomorphic filtering, the received signal is first processed to obtain the cepstrum, and the resultant line-like cepstra corresponding to scalloping in a higher quefrency range is liftered out. However, slowly varying scalloping remains in a lower quefrency region mixed with the cepstrum corresponding to the incident pulse (scalloping, cepstrum quefrency and liftering are acoustic technical terms and will be clear from the explanations below).

Furthermore, reflection at various reflecting elements is frequency dependent.

Slow scalloping and frequency dependent reflection effects cause the incident spectrum profile to suffer distortion, which results in erroneous measurement of characteristics. These problems have not been solved in previous technology.

Processing means according to the present invention is capable of removing the effects of residual slowly varying scalloping, and of the frequency dependency of reflecting elements, on incident wave profile. As a result, the incident wave spectrum profile can be recovered correctly. Thus, correct characteristics of an object can be measured utilizing the correct spectrum profile.

An embodiment of the invention provides apparatus having an effective signal processing means for measuring and imaging characteristics of an object quantitatively by correcting the distorted spectrum profile obtained from a received signal.

Reference is made, by way of example, to the accompanying drawings, in which:

Fig. 1 and Fig. 2 illustrate the distortion caused when two pulse waves overlap:

Fig. 1(a) and (b) illustrate respective waveforms having a same profile but a time lag $\tau_1$ between them,

Fig. 1(c) illustrates the resultant wave formed when the waves of Fig. 1(a) and (b) overlap;

Fig. 1(d) and (e) illustrate the power spectra of the wave shown in Fig. 1(a) and (c) respectively;

Fig. 2(a) illustrates a logarithm curve of the power spectrum shown in Fig. 1(d);

Fig. 2(b) illustrates a cepstrum of the power spectrum shown in Fig. 1(e);

Fig. 2(c) illustrates a cepstrum shown in Fig. 2(b) filtered with a lifter;

Fig. 3 is a block diagram illustrating a circuit for generating a Gaussian shaped transmitting ultrasonic pulse wave;

Fig. 4(a) illustrates schematically the tissues of a human body to be measured with an ultrasonic pulse wave in a reflection mode;

Fig. 4(b) illustrates the waveform of a transmitted ultrasonic pulse;

Fig. 4(c) illustrates the waveform of a received signal wave derived from the pulse of Fig. 4(b) reflected at reflecting elements inside the human body of Fig. 4(a);

Fig. 5 illustrates schematically the location of reflecting elements inside an object (the human body);

Fig. 6(a) is a graphical illustration of two examples of power spectrum profile and corresponding logarithm curves;

Fig. 6(b) illustrates the power cepstrums of the power spectrums shown in Fig. 6(a);

Fig. 7(a) illustrates graphically the forms of $f^n$ for several values of n (towards the top of the Figure) and their corresponding logarithms curves (towards the bottom of the Figure);

Fig 7(b) illustrates graphically the cepstrums of $f^n$ for several values of n;

Fig. 8(a) illustrates a magnitude cepstrum profile of an echo pulse;

Fig. 8(b) illustrates a lowpass filtered and/or liftered cepstrum profile mainly corresponding to an incident echo pulse having a Gaussian distribution modified with f to nth power reflection effects and slow scalloping effects;

Fig. 8(c) illustrates a profile of the magnitude cepstrum shown in Fig. 8(a) after highpass filtering;

Fig. 9 illustrates a power spectrum of a lowpass liftered echo pulse and scalloping factors for $\Omega = 0.47$ $f_{z0}$ and $\Omega = 0.71$ $f_{z0}$;

Fig. 10 is a block diagram of a measuring apparatus embodying the present invention, having a signal processing means, utilizing a power spectrum profile of an ultrasonic pulse beam, able to extract attenuation slope and display its tomographic image.

For assistance in understanding the principles of an ultrasonic measuring device, a simple interaction between two overlapped waves will be described briefly.

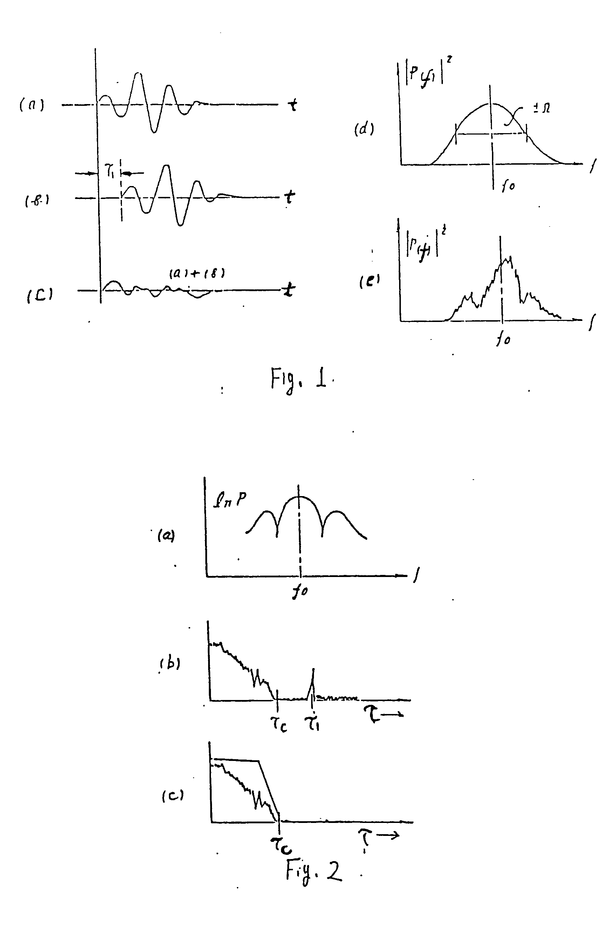

As shown in Fig. 1, a pulse wave (a) and a wave (b) having similar waveforms with a time delay $\tau_1$ between them are superimposed to form a resultant wave (c). The waves (a) and (b), naturally, have the same power spectrum, as seen at (d), with a smooth rounded profile, but the power spectrum of the resultant wave (c) is an indented curve (e) similar in shape to a cross section of a scallop shell. From this similarity, the indentation of the spectrum (e) is called scalloping.

In a heterogeneous medium such as biological tissue, it is unavoidable that transmitted waves and their echoes will take propagating paths such that they overlap and interact with each other. This results in scalloping in the power spectrum of the overlapped waves. Difficulty arises in recovering incident wave profile (d) from a scalloped spectrum (e), and consequentially in the extraction of characteristics of the medium or object.

Two previous procedures have been proposed for recovering the incident wave spectrum profile.

The first is an averaging method.

If a plurality of ultrasonic beams are scanned to cover a finite spatial region inside an object, and the echo signals from many locations around points of interest along each scanning path are combined to provide an averaging ensemble, the averaged spectrum profile becomes smooth statistically. This method is basically a statistical averaging method which requires a fairly large space around a point of interest, as a sufficiently large numbered ensemble is necessary to smooth the scalloping. Such a large space involves loss of spatial resolution. For example, with human body tissue, the spatial resolution of this method is usually 30 mm square. In addition, the smoothing effect is often unsatisfactory.

The second is a method known as homomorphic filtering utilizing the 'cepstrum', which is commonly used in analyzing seismic waves and geological stratum investigation.

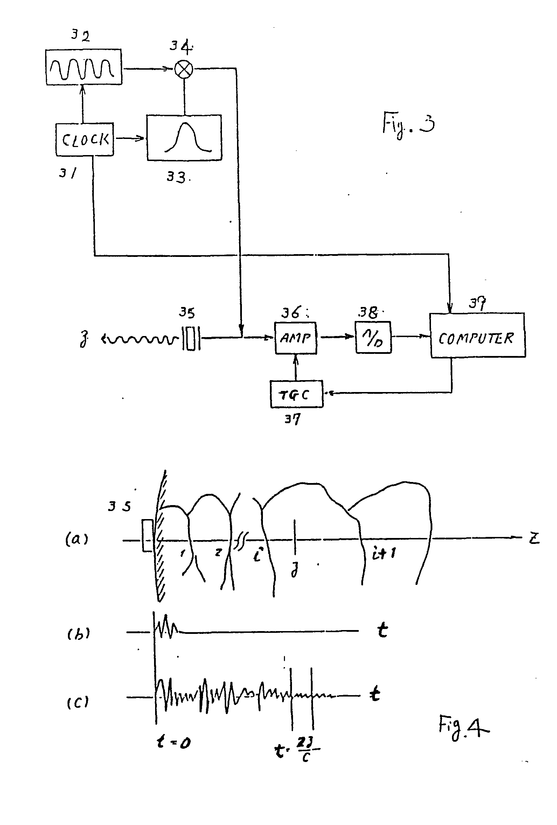

The cepstrum is illustrated in Fig. 2(b). It is obtained by Fourier transformation of the logarithm (Fig. 2(a)) of the power spectrum, $1n|P(f)|^2$. The abscissa in Fig. 2(b) is a time lag or 'quefrency' $\tau$ axis, in units of time as for Fig. 1(a) to (c). A time lag $\tau_1$ between two identical waveforms results in line cepstra as shown in Fig. 2(b). In a geological stratum investigation, a layer location is analysed using this lag time. It is also possible to recover an incident pulse spectrum by cutting off line cepstra in a higher quefrency range, above cutoff quefrency $\tau_c$. This cutting off is performed by applying a low pass window (this windowing is called 'liftering' when applied to the cepstrum), which passes only the cepstrum corresponding to the power spectrum (d) but rejects the cepstrum corresponding to the scalloping. Finally a cepstrum (c) as shown in Fig. 2 is obtained and the original spectrum (d) can be recovered by performing inverse-transformation.

With the second method information regarding the acoustic characteristics of an object are obtained by analyzing the recovered power spectrum. This method is effective when the line spectrums (cepstra) of the cepstrum corresponding to the scalloping exist apart from the cepstrum corresponding to the incident wave, and can be separated clearly and easily, as it can in seismic wave analysis. This method is called the homomorphic filtering method. Measured attenuation coefficients of ultrasonic sound waves obtained utilizing the above-mentioned method are reported, for example, in Ultrasonic Imaging 4. P 234 to 266, 1982 by C. R. Crawford, A. C. Kak, Multipath Artifact Correction in Ultrasonic Transmission Tomography, and in NBS special Publ. 525, p. 287—295, 1979, by J. Fraser, G. S. King, J. Birnholz, Ultrasonic Tissue Characterization 2.

However, when an object has a variety of closely spaced intervals in micro-structures, as in tissue of the human body, a variety of lengths of time lags $\tau$, are effective between overlapped pulses, some of which are shorter than the cutoff quefrency $\tau_c$. Thus perfect separation of the line cepstrum corresponding to scalloping has never been achieved in reality, since many line cepstra occur in the quefrency ranges corresponding to the incident pulse even after liftering.

The power spectrum is obtained by inverse-Fourier and inverse-logarithm transformation of the liftered cepstrum. At this stage, remaining line cepstra, corresponding to scalloping in the lower quefrency range, below $\tau_c$, cause the recovered power spectrum to suffer serious distortion or deformation and obstruct the obtaining of exact characteristics of the object.

Especially in the human body, the object to be measured includes various sizes of tissues from the size of a cell of around 10 µm to the size of blood vessels of a few mm in diameter. Distance $\delta$ between reflecting elements causes time lag $\tau$ as given by the formula $\tau = 2\delta/C$, where C is sound velocity in the medium. So, the cepstrum of human body tissue contains may line cepstra in the lower quefrency range near $\tau = 0$. Generally, $\tau$ is regarded as having an almost continuous Gaussian or exponential probability density distribution, and is an even function along the $\tau = 0$ axis. This causes serious distortion in the finally recovered power spectrum making it inadequate or unsuitable for medical diagnosis.

In addition, there is another undesirable fact. This is the frequency dependence of the reflection indexes of microstructures inside the object. This dependence causes the profile of the incident spectrum to suffer additional distortion.

An example of a device to which an embodiment of the present invention can be applied, an ultrasonic device for medical diagnosis, will be described with reference to Fig. 3.

A piezo-electric transducer transmits an ultrasonic pulse into a human body from its skin surface, and receives reflected signals, echoes, which return to the transducer. The received echoes are converted into electrical signals and processed with electrical circuits or computers. The signals of the echoes are analyzed and the distribution of, for example, the attentuation slope is obtained as a function of z along the travelling path, (scan line) axis z, directed into the interior of the body. Finally, a group or collection of information is processed and the attenuation slope distribution is displayed on a displaying device such as a cathode ray tube.

Fig. 3 illustrates a circuit for generating a transmitting pulse of Gaussian shape. The pulse has a center frequency $f_0$ and a Gaussian envelope. A continuous sine wave of a frequency $f_0$ is generated by an oscillator 32, which is controlled by a clock generator 31 involving a frequency divider, which steps down the clock frequency by 1/n to $f_0$. A Gaussian signal generator 33 has a memory storing a A/D converted Gaussian envelope signal as a function of time, the digital values of which are read out in sequence one by one under the control of the clock signal. This output is transformed by a D/A converter included in the signal generator 33 to provide a Gaussian envelope signal, which is multiplied with the output of the oscillator 32 using multiplier 34. Thus a transmitting pulse having an exact Gaussian envelope as shown in Fig. 1 is obtained and this results in an exact Gaussian spectrum.

A piezoelectric transducer 35 is a device capable of converting electrical energy to acoustic energy and vice versa. Various materials of high piezoelectric efficiency, such as PZT, have been developed for the transducer material. In the example of Fig. 3, one transducer 35 is used for both transmitting a pulse (a) and receiving reflected echoes effectively.

Non-linearity of the transducer 35, if any, can be corrected by a pre-determined circuit of the signal generator 33 in order to obtain a correct Gaussian wave shape of a transmitted ultrasonic beam.

Non-linearity of a receiving transducer can also be corrected electrically with an amplifier 36, an A/D converter 38 or a computer 39.

A time gain controller (TGC) 37 controls the output gain of the amplifier 36 according to a predetermined time program. The micro computer 39 stores A/D converted received echo signals in digital form and performs necessary signal processing. The computing processes can be carried out with the aid of software, but if higher processing speed is keenly desired, hardware may be implemented to allow processing on a real-time basis.

Before describing the functions of the apparatus of Fig. 3, for assistance in understanding, the physical principles of ultrasonic wave propagation in a body will be described briefly.

The pulse length of a Gaussian enveloped ultrasonic pressure wave pulse with center frequency $f_0$ having half-maximum-width $T_{1/2}$ can be considered approximately to be from two to three times $T_{1/2}$. The power spectrum of the Gaussian waveform pulse also has a Gaussian profile having a central frequency $f_0$ and a half-maximum-width $\Omega$, namely a frequency band width $\Omega$, expressed by

$$\Omega = 0.627/T_{1/2} \qquad\qquad (1)$$

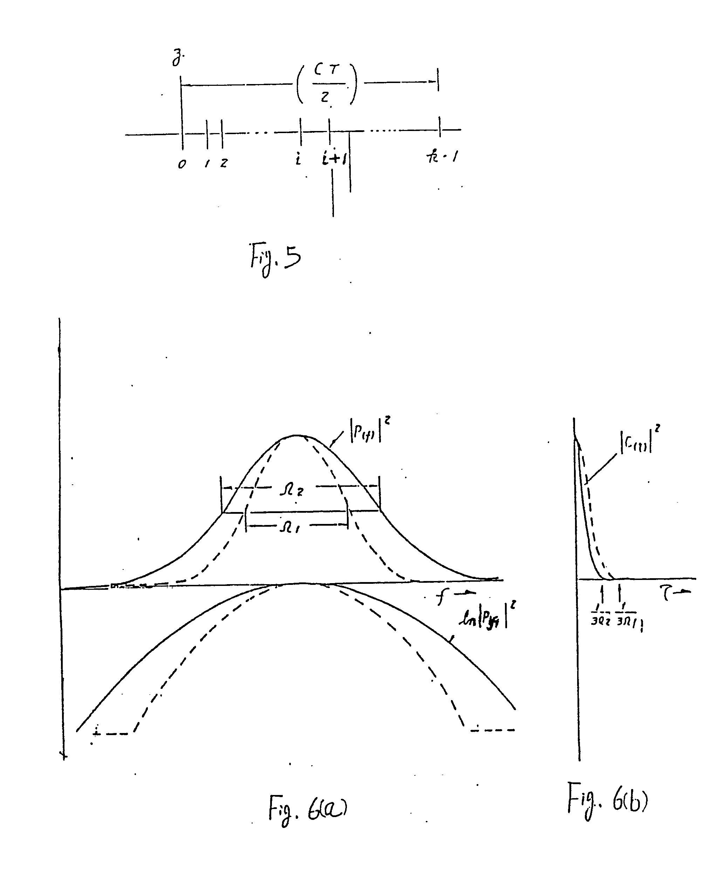

An ultrasonic pulse incident on the surface of a human body (see Figs. 4(a) and (b)) propagates internally of the body along a path (z-axis), usually a straight path. It is subject to frequency dependent attenuation loss (sum of absorption, scattering, reflection, back scattering, diffraction and refraction) and frequency independent stepwise specular transmission loss (caused by mirror-like reflection and refraction at a boundary between two organs). The attenuation coefficient is expressed by the following formula,

$$\alpha(z) = \beta(z)f \qquad\qquad (2)$$

$\beta(z)$ is called attenuation slope, and (f) denotes the frequency of the ultrasonic pulse waves.

It is assumed that an ultrasonic pulse echo reflected by reflecting elements in the body returns along its

5

outward path. The power reflecting index or coefficient Ref at a depth z in the body is also frequency dependent and is given empirically by

$$Ref = k(z) \cdot f^{n(z)} \tag{3}$$

$k(z)$ and $n(z)$ are parameters peculiar to the organs of interest at z, and usually $n(z)$ takes a value in the range 2 to 4.

A reflected wave is subject to similar attenuation on its returning path to the body surface, where it is received again by the transducer 35 and converted to an electrical signal (see Fig. 4(c)). The overall time t of a returning echo reflected at a depth z will be given as $t = 2z/C$, where C is the ultrasonic sound propagating speed in the object. Time origin $t = 0$ is taken when a pulse is transmitted at the body surface $z = o$.

Assuming that sound speed in the object is constant, the depth z is proportional to the return time t, so it is possible to choose an echo signal corresponding to the depth of a point of interest by applying a time gate of width $T_g$ which has sufficient time length to cover the pulse length. This gated signal is obtained by reading out a train of A/D converted and stored echo signal data of time width $T_g$ corresponding to the time t (depth z), from the memory of the computer. The width of $T_g$ is desirably equal to pulse width ($2 \times T_{1/2}$) or longer. The received signal thus read out will be called an echo pulse.

One of the acoustic characteristics of human tissue which it is useful to measure and display as a tomographic image of the object, is attenuation slope as given in equation (2) as a function of z. The principles involved in obtaining this characteristic will now be described.

Assuming that the transmitting ultrasonic pressure wave pulse has a Gaussian wave form, then its power spectrum also has a Gaussian form as expressed in the following equation,

$$|P(f)|^2 = Ae - \frac{(f-f_0)^2}{2\sigma} \tag{4}$$

where $|P(f)|^2$ is the power spectrum of the transmitting ultrasonic pulse pressure wave, and $\delta$ is the variance of the Gaussian distribution. Then, the power spectrum of an echo pulse is given in the following formula.

$$|Pe(f)|^2 = A.K.e. \frac{B(B\sigma^2 - 2f_0)^2}{2} . e^{-\frac{\{(f - (f_0 - \sigma^2 B)\}^2}{2\sigma^2}} . f^n \tag{5}$$

where $|Pe(f)|^2$ is the power spectrum of the echo pulse and A, K are constants independent of the frequency, and B is given

$$B = 4 \int_o^z \beta(z)dz$$

As is known from equation (5), when n is equal to 0, that is, when power reflecting index is independent of frequency, the power spectrum of the pulse echo has a Gaussian distribution and the variance remains unchanged, but its center frequency $f_{z0}$ is shifted downwards. This down shift of the center frequency is expressed by:

$$f_0 - f_{z0} = \sigma^2 . B$$
$$= 4\sigma^2 \int_\sigma^z \beta(z) . dz \tag{6}$$

The center frequency $f_0$ is known and $f_{z0}$ can be obtained for each fixed value of z by processing the spectra of echo pulses with the computer 39. Hence, the attenuation slope distribution can be obtained as a function of z by differentiation or taking differences of obtained $(f_0 - f_{z0})$'s for various values of z.

In the same way, attenuation slope distribution (z) can be obtained along z axes (scan lines) shifted in parallel to each other covering a portion of interest in object. Thus a two or three dimensional image of the object is taken and displayed on an imaging screen such as CRT screen. Such an image of attenuation slope is utilized for diagnosis of cancer and the like by comparison with an image for a normal organ. This is a powerful and effective technique having various medical uses.

However, there still remain two problems in practical realization of this technique.

One problem is that n is not 0 in equation (3) or (5), which means that reflecting indices are variable depending on frequency. This can be solved as will be described later.

The other problem is scalloping which appears in the recovered power spectrum profile as described above. The present invention can provide a means of solving these problems, and in particular the latter problem.

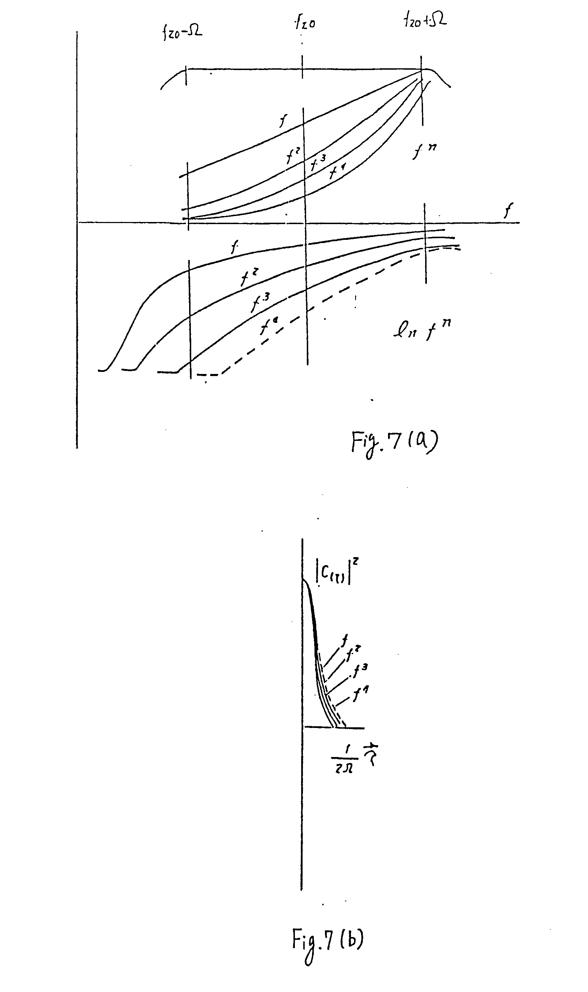

Physical principles will be described first. As depicted in Fig. 5, it is assumed that k reflecting elements exist along a z axis within a region CT/2, where C is ultrasonic sound speed in the medium and T is the pulse length. An incident ultrasonic pulse pressure wave at the edge of the region, $z = O$, is denoted by $r0P_{e0}$ (t),

and the pulse at the i'th reflecting element is denoted by $r_i P_{ei}(t)$. Both wave shapes are the same and expressed by

$$r_i p_{ei}(t) = r_i p_{eo}(t - \frac{2z_{0i}}{C}) \qquad (7)$$

where $Z_{oi}$ is distance between reflecting elements 0 and i, and $r_i$ is acoustic pressure reflecting coefficient, being positive or negative and usually below 10% in biological tissue.

Considering the overlapped wave $P_{s2}(t)$ formed of two echo pulses originating at $i = 0$ and $i = 1$,

$$\left. \begin{array}{l} p_{s2}(t) = r_0 p_{eo}(t) + r_i\, p_{eo}(t - \dfrac{2z_{01}}{C}) \\[2mm] |P_{s2}|^2 = |P_e(f)|^2 . |SF_2|^2 \\[2mm] |SF_2|^2 = r_0{}^2 + r_1{}^2 + 2r_0 r_1 \cos 2\pi(\dfrac{2z_{01}}{C}).f \\[2mm] |Pe(f)|^2 = \text{power spectrum of } p_{eo}(t) \end{array} \right\} \qquad (8)$$

where,

The overlapped waves formed of k echo pulses denoted by $i = 0$, $i = 1, \ldots . . i = k\text{-}1$ are given by

$$P_{sk} = \sum_{i=0}^{k-1} r_i p_{eo}(t - \frac{2z_{0i}}{C})$$

$$|P_{sk}|^2 = |P_{eo}(f)|^2 . |SF_k|^2 \qquad (9)$$

$$|SF_k|^2 = \sum_{i=0}^{k-1} r_i{}^2 + \sum_{i=0}^{k-1}\sum_{8=i+1}^{k-1} 2r_i r_q \cos 2\pi(\frac{2z_{iq}}{C}).f$$

The distance between adjacent reflecting elements provides the smallest $z_{iq}$ and actually it is around 10 µm for cells in a tissue of a human body, and the largest distance is $\pm CT/2$ as described before (T = pulse length). This minus sign expresses a distance from the preceding echo and plus sign from a retarding (succeeding echo).

Taking logarithms of equation (9) to obtain the cepstrum, there is obtained

$$1n|P_{sk}|^2 = 1n|P_{eo}(f)|^2 + 1nR_0{}^2 + 1n(1 + \sum_{i=0}^{k-1}\sum_{8=i+1}^{k-1} \frac{2r_i r_q}{R_0{}^2} \cos 2\pi \frac{2z_{iq}}{C}.f) \qquad (10)$$

where

$$R_0{}^2 = \sum_{i=0}^{k-1} r_i{}^2$$

Considering that $|r_i r_q|/R0^2$ is negligibly small in comparison to 1 and using the approximation formula,

$$1n(1 + x) = x \qquad\qquad x<<1$$

equation (10) can be approximated to

$$1n|P_{sk}|^2 = 1n|P_{eo}(f)|^2 + 1nR_0{}^2 + \sum_{i=0}^{k-1}\sum_{8=i+1}^{k-1} \frac{2r_i r_q}{R_0{}^2} \cos 2\pi \frac{2z_{iq}}{C}.f \qquad (11)$$

The second term is independent of frequency and the third term corresponds to scalloping. The cepstrum is obtained by performing Fourier transformation of (11).

Apparently, the third term of equation (11) has line spectra (cepstra) at quefrency $\tau_{iq}$, where

$$\tau_{iq} = 2z_{iq}/C,$$

of magnitude $2r_i r_q/R0$ (positive or negative real number with no imaginary part.

The magnitude cepstrum of the first term of the equation (11) is obtained as follows. Considering equation (5),

$$|Pe_o(f)|^2 = A'.e^{-\dfrac{(f-f_{zo})^2}{2\sigma^2}}.f^n$$

where

$$A'(z) = A.K.\exp\{1/2.B(B\sigma^2 - 2f_0)\}.\gamma \tag{12}$$

$$B(z) = 4\int_0^z \beta(z)dz$$

$$f_{zo} = f_0 - 2\sigma^2 B$$

Therefore

$$1n|P_{eo}(f)| = 1nA'(z) - \dfrac{(f - f_{zo})^2}{2\sigma^2} + 1nf^n \tag{13}$$

The cepstrum of the first term of equation (11) is obtained by performing Fourier transformation of equation (13) where the first term is independent of frequency f, and the second and third terms are non-periodical functions extending to infinity. Transformation of the latter terms is performed numerically by limiting the dynamic range (ordinate) with 40 to 60 db.

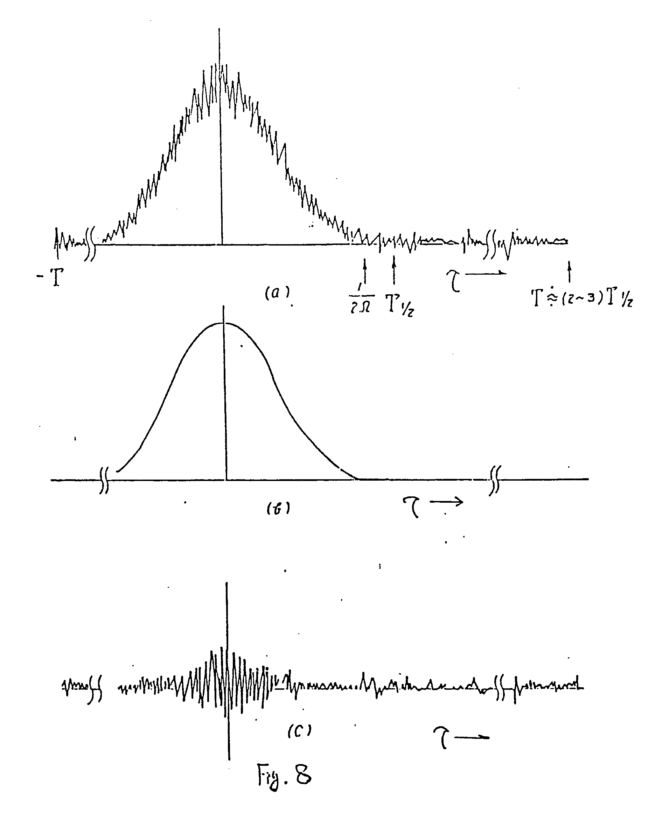

The second term of equation (13) is the logarithm corresponding to the original ultrasonic pulse power spectrum $|P(f)|^2$ shown at the top in Fig. 6(a) having a Gaussian shape, and its logarithm curve (parabola) is shown at the bottom in Fig. 6(a). The solid lines in Fig. 6 refer to a power spectrum having a fractional band width $\Omega_2/f_{zo}$ of 71% and the broken lines refer to a power spectrum having a fractional band width of 47%. As can be seen in the Figure, the logarithm curve in broken line has horizontal (constant) portions at its two ends, which are the lower power spectra limited to be constant. The power cepstrum $|C(\tau)|^2$ of the second term is depicted in Fig. 6(b), the greater part of which exists in the quefrency region smaller than $1/3\Omega$. It is easily provided that the magnitude cepstrum exists at the quefrency range below $1/2\Omega$.

The Fourier transformation of the third term, $f^n$, is performed in a way in which the $f^n$ curve is multiplied with a window flat in the frequency region $f_{zo}\pm\Omega$ and sinusoidally decreasing. Some results are illustrated in Fig. 7. Functions ($f^n$) and their logarithms curves are shown in Fig. 7(a) for several values of the parameter n, and the power cepstrums are shown in Fig. 7(b). The cepstra also exist in the region of quefrency below $1/2\Omega$.

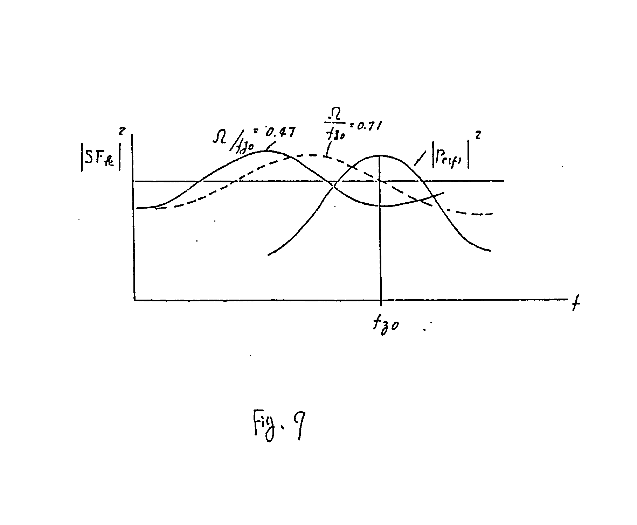

Summarizing the above results, the magnitude cepstrum diagram of the whole power spectrum of the received ultrasonic pressure wave according to equation (13) is obtained as illustrated in Fig. 8(a). The cepstrum is a smooth curve originating from a Gaussian distribution with a frequency dependent $f^n$ character being superposed thereon with line cepstra.

The cepstrum curve of Fig. 8(a) is first processed to eliminate line or line-like cepstra, whilst the $f^n$ and incident Gaussian components are retained in the resultant spectrum.

There are four methods for achieving this purpose.

The first method: If a Fourier transformation is performed again with the cepstrum curve (a) in Fig. 8, the spectrum of the cepstrum corresponding to Gaussian distribution and $f^n$ components exist in a lower neofrequency region and the spectra corresponding to line cepstra exist in a considerable higher neo-frequency region. So, linear lowpass filtering of the cepstrum which functions to cut the spectra existing in the higher neo-frequency region provides a smooth curve as seen at (b) in Fig. 8. Essentially this method works well when the cepstrum curve (a) holds line spectra whose plus values and minus values and frequencies of appearance are approximately balanced as illustrated in the curve shown in Fig. 8(c). In this case, a low frequency component due to line cepstra and still remaining after filtering will be minute.

However, generally, when the line or line-like cepstra in curve (a) are spaced closely and almost tied together, there appear lower neo-frequency components, which cause the recovered power spectrum to suffer distortion. So, reforming or correction of the spectrum to a Gaussian shape is still necessary. A method for doing this will be described later.

The second method: This is a method utilizing a non-linear filter. The line-like cepstrum of the curve (a) is eliminated with a non-linear filter such as a median-filter. This method is suitable when the curve (a) has line-like cepstrum sparsely superposed on a slowly varying cepstrum. This method is also effective to reduce the lower neo-frequency components remaining after filtering the line-like cepstrum when the line-like cepstra have more dominant positive portions than negative portions like a power cepstrum.

The third method: This is a method combining the first method or the second method described above with a method of cutting off all cepstrum of curve (a) corresponding to a higher quefrency region above $1/2\Omega$ where the smooth curve (b) does not exist. This is effective to increase the merit of the first or second method.

The fourth method: For the first step, like the third method, the cepstrum curve corresponding to the higher quefrency above $1/2\Omega$ is cut off without any filtering as in the first or second method. Line-like cepstra in a quefrency range lower than $1/2\Omega$ still remain and cause distortion of power spectrum when inversely transformed. This distortion can be corrected and eliminated using the distortion indices as examined hereafter.

Now, a method of eliminating the distortion of the power spectrum obtained from the processed cepstrum according to the third or fourth method will be described. This method is also applicable to the power spectrum obtained with other methods.

With the fourth method, residual line cepstra appear as slow scallopings in the power spectrum recovered by inverse transformation, whose shape is expressed by equation (9), by eliminating terms corresponding to scallopings of higher frequency as follows:

$$SFk^2 = R_0^2\{1 + \sum_{l,m} \frac{2r_l \cdot r_m}{R_0^2} \cos 2\pi(\frac{2z_{lm}}{C})f\} \tag{14}$$

Where

$$\frac{2z_{lm}}{C} \leqq \frac{1}{2\Omega}$$

The most rapidly varying scalloping appears when $z_{lm}$ is given by the next equation,

$$\frac{2z_{lm}}{C} = \frac{1}{2\Omega}$$

The rapidest scallopings for $\Omega = 0.47f_{zo}$ and $\Omega = 0.71f_{zo}$ are illustrated in Fig. 9, having more slowly varying curves than the curve of incident power spectrum $|P_{eo}(f)|^2$. The line cepstra corresponding to the quefrency lower than $1/2\Omega$ will have further slower scalloping naturally. Therefore, the equation (14) can be expanded with satisfactory approximation as;

$$|SFk|^2 = S\{1 + p'(f - f_{zo}) + q'(f - f_{zo})^2\} \tag{15}$$

Wherein third and higher order terms are neglected.

The residual part of the cepstra derived from $f^n$ in lower quefrency region, are inverse-transformed and become again $f^n$ functions which show also slowly varying curves. So, they can be expanded in the range of $f_{zo} \pm \Omega$ and approximated as follows;

$$f^n = f_{zo}^n\{1 + p'(f - f_{zo}) + q'(f - f_{zo})^2\} \tag{16}$$

Utilizing approximated results as given in equations (15), (16), the final approximated expression of power spectrum of the received signal is obtained from the equation (9) as follows

$$|P_{sk}|^2 = A_0 e^{-\frac{(f - f_{zo})^2}{2\sigma^2}} \cdot \{1 + p(f - f_{zo}) + q(f - f_{zo})^2\} \tag{17}$$

where

$$A = A' \cdot f_{zo}^n \cdot S$$

p, 1: distortion indexes and functions of $p'$, $q'$, $p'$ and $g'$.

An ultrasonic pressure wave with a Gaussian spectrum should keep its profile as the wave travels through a medium as described above, so its received signal should have also a Gaussian spectrum with the same variance. Actually, it is subject to some distortion. The indices p and q provide this distortion, and are obtained from the actual spectrum of the received signal by measuring the deviation from an exact Gaussian spectrum. So it is possible to correct and recover the original Gaussian spectrum using the resultant p and q.

Next, the method of seeking p and q will be described.

One of the methods is a momentum method. First, momenta of several orders are calculated.

$$M_0 = \int_{-\infty}^{+\infty} |Psk|^2 \, df$$

$$M_1 = \int_{-\infty}^{+\infty} f|Psk|^2 \, df$$

The center frequency $f_a$ of the distorted distribution is given through

$$\frac{M_1}{M_0} = f_{z0} + \frac{p\sigma^2}{1 + q\sigma^2} = f_a \tag{18}$$

The second and third momentums around the $f_a$ are given by

$$M_2 = \int_{-\infty}^{+\infty} (f - f_a)^2 |Psk|^2 \, df$$

$$M_3 = \int_{-\infty}^{+\infty} (f - f_a)^3 |Psk|^2 \, df$$

$M_0$, $M_1$, $M_2$, $M_3$ and $\sigma$ are obtained for the measured spectrum, then p and q can be calculated by the following equations.

$$\frac{M_2}{M_0} = \sigma^2 - \frac{p^2\sigma^4}{(1+q\sigma^2)^2} + \frac{2\sigma^4}{1+q\sigma^2} \tag{19}$$

$$\frac{M_3}{M_0} = 2 \left( \frac{p}{1+q\sigma^2} \right)^3 \cdot \delta^6 \left[ 1 - \left( \frac{3q(1+q\sigma^2)}{p^2} \right) \right] \tag{20}$$

Assuming that $q = 0$, then the formula can be simplified and $f_{z0}$ is given by

$$f_{z0} = \frac{M_1}{M_0} - \left( \sigma^2 - \frac{M_3}{2M_0} \right)^{\frac{1}{3}} \tag{21}$$

or

$$f_{z0} = \frac{M_1}{M_0} - \left( \sigma^2 - \frac{M_2}{M_0} \right)^{\frac{1}{2}} \tag{22}$$

Both equations are available.

Other expressions for the distortion and correcting formula are of course available under this invention.

As described before, the down-shift of the center frequency $f_{z0}$ thus obtained leads to the provision of the attenuation slope distribution $\beta(z)$ as a function of z. Two or three dimensional imaging is obtained by processing attenuation slope distribution along a set of scan lines in a region of interest inside an object.

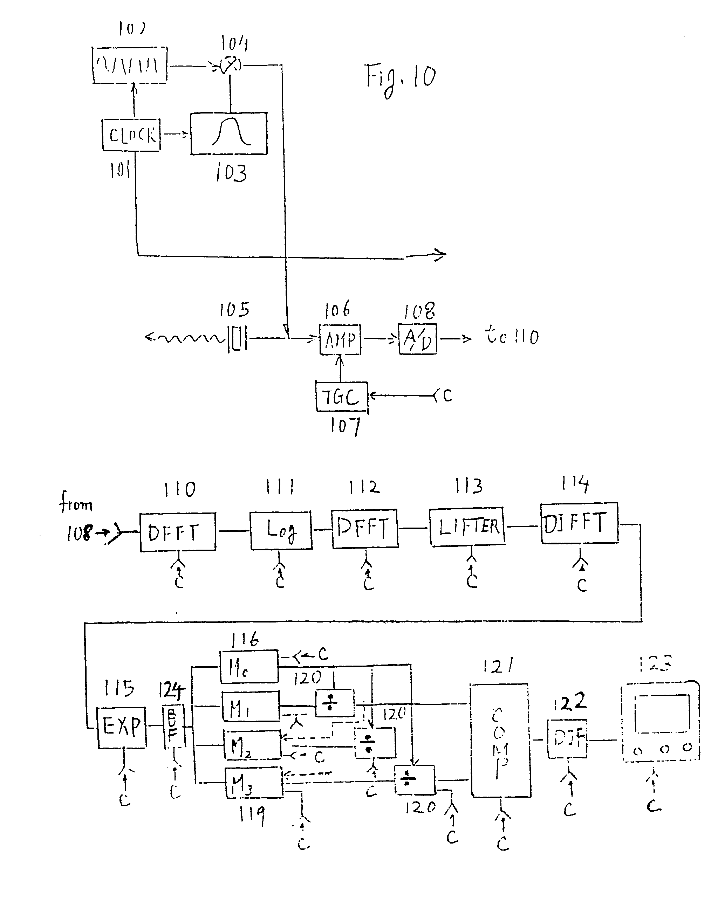

Now another embodiment of the device according to the present invention will be described with reference to Fig. 10. The apparatus is basically the same as that illustrated in Fig. 3, except for the signal processing computing devices. The components in the upper part of Figure 10 correspond to the components in Fig. 3.

A/D converter 108, in Fig. 10, (38 in Fig. 3) outputs a train of A/D converted digital data representing a received echo signal. The digital signal is Fourier-transformed with a conventional digital fast Fourier transformer (DFFT) 110 to output power spectrum $|P_e(f)|^2$ whose logarithms are obtained with a log converter 111. Such conversion is made by reading from a conversion table stored in read only memory (ROM). The output of Log converter 111, namely log $|P_e(f)|^2$ is again Fourier transformed by a DFFT 112 and its output provides the cepstrum $C(\tau)$. The $C(\tau)$ is windowed by a lifter 113 making zero all cepstra located in the range higher than $1/2\Omega$. The liftered cepstrum is processed with a digital fast inverse-Fourier transformer (DFIFT) 114 to $1n|P_e(f)|^2$, which is again converted inversely using an antilogarithm conversion table in an exponential converting circuit EXP 115. The output is the power spectrum $|P_e'(f)|^2$ after homomorphic filtering and is a distorted Gaussian spectrum containing the effects of slow scalloping and the frequency dependency of reflection indexes.

The operation units 116, 117, 118, 119 and 120 calculate the following formula:

$$M_0 = \int |P_e'(f)|^2 \, df \tag{23}$$

$$M_1 = \int f |P_e'(f)|^2 \, df$$

$$f_a = M_1/M_0 \tag{24}$$

$$\left. \begin{array}{l} M_2 = \int (f-f_a)^2 \cdot |P_e'(f)|^2 \, df \\[2mm] M_3 = \int (f-f_a)^3 |P_e'(f)|^2 \, df \end{array} \right\} \tag{25}$$

The operation units are composed of conventional calculators such as adders, multipliers, subtractors and dividers. $M_1/M_0$, $M_2/M_0$ and $M_3/M_0$ are calculated with dividers 120.

With a correction calculator 121, $f_{zo}$ is calculated from equations (18), (19, (20) or one of (21) and (22) for $f_a$. The correction from the higher order approximation, namely equations (18), (19), (20) can be done using a table prepared to provide $f_a - f_{z0}$ given in equation (18), as a function of $M_2/M_0$, $M_3/M_0$ given in equations (19), (20). Such table can be prepared by calculating $f_a - f_{z0}$, $M_2/M_0$, $M_3/M_0$ for possible combinations of $\sigma$, p, q and rearranging the calculated results. The $f_{z0}$ is obtained from the subtraction $f_{z0} = f_a - (f_a - f_{z0})$.

So the output of the correcting calculator 121 provides a corrected center frequency $f_{z0}$. A differentiator 122, being composed of a temporary storage register and a subtractor, provides $\beta(z)$ by calculating the difference of $f_{z0}$ at adjacent depths z and z + $\Delta$ z which are output from the correction calculator 121 in time sequential manner.

As a display device, a cathode ray tube 123 is used. Its brightness is modulated in accordance with $\beta(z)$ and the spot position is controlled in similar manner to correspond to actual depth z and the scan line location (X-co-ordinate). The attenuation slope distribution over a tomographic X—Z plane of the object is imaged on the screen surface of the tube.

With an apparatus as illustrated in Fig. 10, the operation of each circuit is controlled by a clock circuit 101 (the controlled points are denoted with arrows accompanied by a letter C in Fig. 10) and operates within every period T, time gate length, and the output of every stage is transmitted to the subsequent stage, so the apparatus is structured as a pipe-line-processor for real-time processing. However, when the processing speeds of the component elements are not fast enough for the imaging process, a buffer memory 124 is added after the EXP 115 for storing signals temporarily and the signals are processed later so as to match up the operation speeds of each stage, that is, on a non-real time basis.

Furthermore, the distributions of other acoustic characteristics such as reflecting index, acoustic impedance and the like of the object can be derived utilizing the obtained $\beta(z)$. Moreover, the distribution of the 0th moment of the power spectrum processed in accordance with an embodiment of this invention provides a speckle-less B-mode image. Moreover, other characteristics can be obtained more exactly.

The above embodiments of the present invention concern ultrasonic apparatus for medical use, but it will be clear that the present invention is applicable to radars, sonars, geologic structure surveyors, transmission mode ultrasonic CT, and the like.

In the above explanation, it has been assumed that the transmitted ultrasonic pressure wave or its power spectrum has a Gaussian or quasi-Gaussian profile. Now a description will be given for the case of a non-Gaussian profile of a transmitting pulse.

In contradistinction to equation (4) for a "Gaussian" case, a non-Gaussian profile can be approximated by the following equation similar to equation (17).

$$|P(f)|^2 = A.e^{-\dfrac{(f - f_0)^2}{2\sigma^2}}.\{1 + p_0(f - f_0) + q_0(f - f_0)^2\} \tag{26}$$

Parameters in equation (26), $f_0$, $\sigma^2$, $p_0$ and $q_0$ are determined as follows from the measured spectrum.

With the measured spectrum, momentum ratios of $M_1/M_0$, $M_2/M_0$, $M_3/M_0$, maximum spectrum frequency $f_m$ or half-maximum-width $\Omega_a$ are obtained, and substituted into the equations (18), (19), (20), and one of the following equations derived from (26);

$$p_0 + (2q_0 - 1/\sigma^2)(f_m - f_0) - p_0/\sigma^2(f_m - f_0)^2 - q_0/\sigma^2(f_m - f_0)^3 = 0 \tag{27}$$

$$(q_0 - 1/2\sigma^2)^2\Omega_a{}^2 = p_0 - 4(1n1/2).(q_0 - 1/2\delta^2) \tag{28}$$

p0, q0, $\sigma^2$, f0 are obtained by solving the four equations. Thus the spectrum profile of transmitted pulse wave is approximated with the equation (26).

The echo pulse spectrum is given by the following equations.

$$|P_e(f)|^2 = A.e^{-\dfrac{(f - f_0)^2}{2\sigma^2}}.\{1 + p_0(f - f_0) + q(f - f_0)^2\}.e^{-Bf}.K.f^n \tag{29}$$

11

When n = 0, the spectrum of echo pulse is expressed by;

$$|P_e(f)|^2 = A_z \cdot e^{-\dfrac{(f - f_{z0})^2}{2\sigma^2}} \cdot \{1 + p_z(f - f_{z0}) + q_z + (f - f_{z0})^2\} \tag{30}$$

wherein

$$A_z = A.K.(1 + p_0 f_{z0} + q_0 f^2_{z0}) \cdot e^{\sigma^2 B(2\sigma^2 - 2f_0)}$$

$$P_z = \dfrac{p_0 + 2q_0 f_{z0}}{1 + p_0 f_{z0} + q_0 f_{z0}^2}, \qquad q_z = \dfrac{q_0}{1 + p_0 f_{z0} + q_0 f_{z0}^2}$$

$$f_{z0} = f_0 - \sigma^2 B \tag{31}$$

$$B = 4 \int_0^z \beta(z)\, dz$$

So, the spectrum of the echo pulse (31) has a similar form to that of transmitting pulse (26) having a frequency down-shift $f - f_{z0}$.

The variance $\delta^2$ remains unchanged and $f_{z0}$, $p_z$ and $q_z$ are obtained by equations (18), (19), (20) and (30). The frequency down-shift is given through equation (31),

$$f_0 - f_{z0} = 4\sigma^2 \int_0^z \beta(z)\, dz$$

and the attenuation slope distribution $\beta(z)$ is obtained by taking the frequency down-shift for various values of z consequently.

When n is not equal to 0, slowly varying scalloping and $f^n$ factors remain after homomorphic filtering and the spectrum given by the equation (17), is combined with the equation (29), then an equation similar to (30) is obtained, but $p_z$ and $q_z'$ are replaced by $p_z'$ and $q_z'$ respectively. As the form of the equation remains the same, so the factors $f_{z0}$, $p_z$ and $q_z'$ can be obtained.

In the above embodiments, the obtaining of an attenuation slope utilizing center frequency down shift has been described. Another way, utilizing the spectrum profile itself, corrected with the $p_0$, $q_0$; $p_z$, $q_z$; $p_z'$, $q_z'$ can be available for either Gaussian or non-Gaussian spectrum.

A lowpass filtered and/or liftered cepstrum was used for removing rapid scalloping in the above description, but a highpass filtered cepstrum is available to obtain line or line-like cepstra as shown in Fig. 8(c). In Fig. 8(c) the abscissa represents the distance between every combination of reflecting elements within pulse length positioning at the depth z and the ordinate represents the sum of, reflecting intensity products of every reflecting point pair having the same separation. Therefore, the microstructure of a heterogeneous medium such as biological tissue can be estimated with the highpass filtered or liftered cepstrum, or the corresponding spectrum.

For example, by calculating the spectrum momenta of 0th order and first order, the mean size of microstructure of a tissue can be estimated, as mean quefrency, which provides a parameter representing another tissue characteristic which will contribute to medical diagnosis.

**Claims**

1. An apparatus utilizing the spectrum profile of a received signal wave, derived from an incident pulse signal, which may be sonic, e.g. ultrasonic, or electromagnetic, after transmission through or reflection in an object, to measure a characteristic of the object,

the apparatus including:

means (31—35; 101—105) for transmitting the incident pulse signal with a Gaussian or quasi-Gaussian-shaped spectrum; and

signal processing means comprising:

means (106—112) for deriving the cepstrum of the received signal wave;

filtering means (113) for separating line-like rapidly varying cepstrum components from slowly varying cepstrum components contained in the derived cepstrum;

means (114, 115) for recovering a power spectrum at least from said separated slowly varying cepstrum components; and

means (116—122) for extracting the said characteristic from the recovered power spectrum, which comprise means for obtaining distortion indices of the recovered power spectrum, which distortion indices indicate the distortion of the spectrum from Gaussian form, and for correcting for the distortion by reference to the distortion indices.

2. Apparatus as claimed in claim 1, wherein the said means for transmitting the incident pulse signal comprise:

an oscillator (102), operable to generate a sine wave signal;

a Gaussian signal generator (103) having a memory storing an A/D converted Gaussian envelope signal as a function of time;

a clock generator (101);

a frequency divider (101); and

a multiplier (104);

wherein the oscillator is driven by the output of the clock generator, as divided by the frequency divider, to generate the sine wave signal with the divided clock frequency, which sine wave signal is applied to the multiplier, and the Gaussian signal generator is driven by the clock signal to read out digital values stored in the memory, one by one, the read-out values being applied to the multiplier and therein multiplied with the sine wave signal, to provide a signal with a Gaussian envelope.

3. An apparatus utilizing the spectrum profile of a received signal wave, derived from an incident pulse signal, which may be sonic, e.g. ultrasonic, or electromagnetic, after transmission through or reflection in an object, to measure a characteristic of the object,

the apparatus including:

means for transmitting the incident pulse signal with a non-Gaussian spectrum; and

signal processing means comprising:

means for deriving the cepstrum of the received signal wave;

filtering means for separating line-like rapidly varying cepstrum components from slowly varying cepstrum components contained in the derived cepstrum;

means for recovering a power spectrum at least from said separated slowly varying cepstrum components; and

means for extracting the said characteristic from the recovered power spectrum, which comprise means for approximating said non-Gaussian spectrum to a product of a Gaussian distribution and a polynomial consisting of a summation of powers of frequency, and means for obtaining distortion indices of the Gaussian distribution component of the recovered power spectrum, which distortion indices indicate distortion of that component from Gaussian form, and for correcting for the distortion by reference to the distortion indices.

4. Apparatus as claimed in claim 1, 2 or 3, wherein the filtering means (113) comprise: means for lowpass filtering the cepstrum, with a cut-off set to pass the slowly varying cepstrum components, mainly originating from the incident pulse waveform, and rejecting the rapidly varying line-like cepstrum components, originating from pulse overlap.

5. Apparatus as claimed in claim 1, 2 or 3, wherein the filtering means (113) comprise means for highpass filtering of the cepstrum, to reject the slowly varying cepstrum components and to pass the rapidly varying cepstrum components.

6. Apparatus as claimed in claim 1, 2, 3 or 4, wherein the filtering means (113) comprise a non-linear lowpass filter, such as a median filter, to reject the line-like cepstrum components.

7. Apparatus as claimed in claim 1, 2, 3 or 4, wherein the filtering means (113) provide Homomorphic filtering with a cut off quefrency $\tau c$.

8. Apparatus as claimed in claim 7, wherein the cepstrum is processed by Homomorphic filtering with a cutoff quefrency $\tau c$ set within plus or minus 50% of the reciprocal of the doubled band-width of the spectrum of the incident pulse signal.

9. Apparatus as claimed in any preceding claim, wherein the means for extracting the said characteristic comprise means (121) for estimating the center frequency of an undistorted Gaussian spectrum from the distorted recovered power spectrum with the aid of the distortion indices of the recovered power spectrum.

10. Apparatus as claimed in any preceding claim, wherein the means for extracting the said characteristic comprise:

means (116—120) for calculating the momenta of 0th order, first order, second order, third order and higher orders from the recovered power spectrum; and

means (121) for calculating the distortion indices of the recovered power spectrum, such as center frequency, bandwidth, skew, those indices expressing the distortion and the correction factors using said momenta.

11. Apparatus as claimed in any preceding claim, wherein the incident pulse signal is ultrasonic, futher comprising:

means (123) for imaging a characteristic of biological tissue such as attenuation coefficient, reflection coefficient and measures of heterogeneity, and for displaying the characteristic image together and/or combined with a conventional B mode image.

13

## EP 0 119 844 B1

**Patentansprüche**

1. Vorrichtung zur Verwendung des Spektralprofils einer empfangenen Signalwelle, welche von einem einfallenden Impulssignal abgeleitet ist, welches ein Schallsignal, ein Ultraschallsignal oder ein elektromagnetisches Signal sein kann, nach Transmission oder Reflexion in einem Objekt, um eine Charakteristik des Objektes zu messen,

welche Vorrichtung enthält

Einrichtungen (31—35; 101—105) zum Senden des einfallenden Impulssignals mit einem Gauß- oder einem quasi-Gauß-schen Spektrum; und

Signalverarbeitungseinrichtungen, welche umfassen;

Einrichtungen (106—112) zum Ableiten des Cepstrum der empfangenen Signalwelle;

Filtereinrichtungen (113) zum Trennen linienartiger, schnell veränderlicher Cepstrumkomponenten von langsam variierenden Cepstrumkomponenten, die in dem abgeleiteten Cepstrum enthalten sind;

Einrichtungen (114, 115) zum Wiedererlangen eines Energiespektrums wenigstens von den separierten, langsam variierenden Cepstrumkomponenten; und

Einrichtungen (116—122) zum Extrahieren der genannten Charakteristik von dem wiederhergestellten Energiespektrum, welche Einrichtungen zum Erhalten von Verzerrungsindizes des wiederhergestellten Energiesspektrums umfassen, welche Verzerrungsindizes die Verzerrung des Spektrums von der Gauß-Form anzeigen, und zum Korrigieren der Verzerrung durch Referenz zu den Verzerrungsindizes.

2. Vorrichtung nach Anspruch 1, bei der die genannten Einrichtungen zum Senden des einfallenden Impulssignales umfassen:

einen Oszillator (102), der betreibbar ist, um ein Sinuswellensignal zu generieren;

einen Gauß-Signalgenerator (103), der einen Speicher hat, der eine A/D-konvertiertes Gauß-sches Envelopensignal als eine Zeitfunktion speichert;

einen Taktgenerator (101);

einen Frequenzteiler (101); und

einen Vervielfacher (104);

wobei der Oszillator durch den Ausgang des Taktgenerators getrieben wird, wie er durch den Frequenzteiler geteilt wird, um das Sinuswellensignal mit der geteilten Taktfrequenz zu erzeugen, welches Sinuswellensignal dem Vervielfacher zugeführt wird, und der Gauß-Signalgenerator durch das Taktsignal getrieben wird, um digitale Werte, die in dem Speicher gespeichert sind, einen nach dem anderen auszulesen, und die ausgelesenen Werte dem Vervielfacher zugeführt und darin mit dem Sinuswellensignal multipliziert werden, um ein Signal mit einer Gauß-schen Envelope zuzuführen.

3. Vorrichtung, welche das Spektralprofil einer empfangenen Signalwelle verwendet, die von einem einfallenden Impulssignal abgeleitet ist, welches ein Schallsignal, ein Ultraschallsignal oder ein elektromagnetisches Signal sein kann, nach Transmission oder Reflektion in einem Objekt, um eine Charakteristik des Objektes zu messen,

welche Vorrichtung enthält:

Einrichtungen zum Senden des einfallenden Impulssignales mit einem nicht-Gauß-schen Spektrum; und

Signalverarbeitungseinrichtungen, welche umfassen:

Einrichtungen zum Ableiten des Cepstrum der empfangenen Signalwelle;

Filtereinrichtungen zum Trennen linienartiger, schnell veränderlicher Cepstrumkomponenten von langsam variierenden Cepstrumkomponenten, die in dem abgleiteten Cepstrum enthalten sind;

Einrichtungen zum Wiedererlangen eines Energiespektrums wenigstens von den separierten, langsam variierenden Cepstrumkomponenten; und

Einrichtungen zum Extrahieren der genannten Charakteristik von dem wiederhergestellten Energispektrum, welche Einrichtungen zum Approximieren des genannten nicht-Gauß-schen Spektrums zu einem Produkt einer Gauß-schen Verteilung und eines Polynoms umfassen, welches aus einer Summation von Energien der Frequenz besteht, und Einrichtungen, um Verzerrungsindizes der Gauß-schen Verteilungskomponente des wiederhergestellten Energiespektrums zu ermitteln, welche Verzerrungsindizes die Verzerrung von jener Komponente von der Gauß-schen Form anzeigen, und zum Korrigieren der Verzerrung durch Referenz zu den Verzerrungsindizes.

4. Vorrichtung nach Anspruch 1, 2 oder 3, bei der die Filtereinrichtung (113) umfaßt: Einrichtungen zur Tiefpaßfilterung des Cepstrum, mit einer Begrenzung, die eingestellt ist, um die langsam variierenden Cepstrumkomponenten hindurchzulassen, die hauptsächlich von der einfallenden Impulswellenform erzeugt werden, und um die schnell variierenden, linienartigen Cepstrumkomponenten zurückzuweisen, welche von der Impulsüberlappung erzeugt werden.

5. Vorrichtung nach Anspruch 1, 2 oder 3, bei der die Filtereinrichtung (113) eine Einrichtung zum Hochpaßfiltern des Cepstrums umfaßt, um die langsam variierenden Cepstrumkomponenten hindurchzulassen.

6. Vorrichtung nach Anspruch 1, 2, 3 oder 4, bei der die Filtereinrichtung (113) einen nicht-linearen Tiefpaßfilter umfaßt, z.B. einen Medianfilter, um die linienartigen Cepstrumkomponenten zurückzuweisen.

7. Vorrichtung nach Anspruch 1, 2, 3 oder 4, bei der die Filtereinrichtung (113) eine homomorphe Filterung mit einer Grenzfrequenz $\tau c$ liefert.

8. Vorrichtung nach Anspruch 7, bei der das Cepstrum durch homomorphes Filtern mit einer Grenzfrequenz $\tau c$ verarbeitet wird, welche innerhalb plus oder minus 50% des Reziprokwertes der doppelten Bandbreite des Spektrums des einfallenden Impulssignales ist.

9. Vorrichtung nach einem der vorhergehenden Ansprüche, bei der die Einrichtung zum Extrahieren der genannten Charakteristik Einrichtungen (121) umfaßt, zum Schatzen der Zentralfrequenz eines nicht verzerrten Gauß-schen Spektrums von dem verzerrten wiederhergestellten Energiespektrum mit Hilfe der Verzerrungsindizes des wiederhergestellten Energiespektrums.

10. Vorrichtung nach einem der vorhergehenden Ansprüche, bei der die Einrichtung zum Extrahieren der genannten Charakteristik umfaßt:

Einrichtung (116—120) zum Berechnen der Momente der 0-ten Ordnung, ersten Ordnung, zweiten Ordnung, dritten Ordnung oder höherer Ordnungen von dem wiederhegestellten Energiespektrum; und

Einrichtungen (121) zum Berechnen der Verzerrungsindizes des wiederhergestellten Energiespektrums, sowie der Zentralfrequenz, der Bandbreite, der Verzerrung, wobei jene Indizes die Verzerrung und die Korrekturfaktoren, welche jene Momente verwenden, ausdrücken.

11. Vorrichtung nach einem der vorhergehenden Ansprüche, bei der das einfallende Impulssignal ein Ultraschallsignal ist, ferner mit:

Einrichtungen (123) zur Abbildung einer Charakteristik eines biologischen Gewebes wie eines Dämpfungskoeffizienten, Reflektionskoeffizienten und Messungen der Heterogenität und zur Anzeige des charakteristischen Bildes zusammen und/oder kombiniert mit einem herkömmlichen B-Modusbild.

## Revendications

1. Un appareil utilisant le profil spectral d'une onde de signal reçue, qui est obtenue à partir d'un signal incident sous forme d'impulsions qui peut être sonore, par exemple ultrasonore, ou électromagnétique, après transmission ou réflexion par un objet, pour mesurer une caractéristique de l'objet, l'appareil comprenant:

des moyens (31—35; 101—105) destinés à émettre le signal incident sous forme d'impulsions avec un spectre de forme gaussienne ou quasi-guassienne; et

des moyens de traitement de signal comprenant;

des moyens (106—112) pour élaborer le cepstre de l'onde de signal reçue;

des moyens de filtrage (113) pour séparer des composantes de cepstre variant rapidement, semblables à des raies, par rapport à des composantes de cepstre variant lentement qui sont contenues dans le cepstre élaboré;

des moyens (114, 115) pour récupérer un spectre de puissance au moins à partir des composantes de cepstre variant lentement qui ont été séparées; et

des moyens (116—122) pour extraire la caractéristique précitée du spectre de puissance récupéré, comprenant des moyens pour obtenir des indices de distorsion du spectre de puissance récupéré, ces indices de distorsion indiquant la distorsion du spectre par rapport à la forme gaussienne, et pour corriger la distorsion par référence aux indices de distorsion.

2. Appareil selon la revendication 1, dans lequel les moyens d'émission du signal incident sous forme d'impulsions comprennent:

un oscillateur (102) capable de produire un signal sinusoïdal;

un générateur de signal gaussien (103) ayant une mémoire qui enregistre en fonction du temps un signal d'enveloppe gaussien ayant subi une conversion A/N;

un générateur d'horloge (101);

un diviseur de fréquence (101); et

un multiplicateur (104);

dans lequel l'oscillateur est attaqué par le signal de sortie du générateur d'horloge, divisé par le diviseur de fréquence, pour produire le signal sinusoïdal avec la fréquence d'horloge divisée, ce signal sinusoïdal étant appliqué au multiplicateur, et le générateur de signal gaussien est attaqué par le signal d'horloge pour lire, une à une, des valeurs numériques qui sont enregistrées dans la mémoire, les valeurs lues étant appliquées au multiplicateur et multipliées dans celui-ci par le signal sinusoïdal, pour donner un signal ayant une enveloppe gaussienne.

3. Un appareil utilisant le profil spectral d'une onde de signal reçue, obtenue à partir d'un signal incident sous forme d'impulsions qui peut être sonore, par exemple ultrasonore, ou électromagnétique après transmission ou réflexion dans un objet, pour mesurer une caractéristique de l'objet, l'appareil comprenant:

des moyens pour émettre le signal incident sous forme d'impulsions avec un spectre non gaussien; et des moyens de traitement de signal comprenant:

des moyens pour élaborer le cepstre de l'onde de signal reçue;

des moyens de filtrage pour séparer des composantes de cepstre variant rapidement, semblables à des raies, par rapport à des composantes de cepstre variant lentement qui sont contenues dans le cepstre élaboré;

des moyens pour récupérer un spectre de puissance, au moins à partir des composantes de cepstre variant lentement qui ont été séparées; et

des moyens pour extraire la caractéristique précitée du spectre de puissance récupéré, qui comprennent des moyens pour calculer une approximation du spectre non gaussien par un produit d'une distribution gaussienne et d'un polynôme constitué par une sommation de puissances de fréquence, et des moyens pour obtenir des indices de distortion de la comosante de distrubution gaussienne du spectre de puissance récupéré, ces indices de distorsion indiquant la distorsion de cette composante par rapport à la forme gaussienne, et pour corriger la distorsion par référence aux indices de distorsion.

4. Appareil selon la revendication 1, 2 ou 3, dans lequel les moyens de filtrage (113) comprennent: des moyens pour effectuer un filtrage passe-bas du cepstre, avec une fréquence de coupure fixée de façon à laisser passer les composantes de cepstre variant lentement, qui proviennent principalement du signal incident sous forme d'impulsions, et à rejeter les composantes de cepstre variant rapidement, semblables à des raies, qui proviennent du chevauchement des impulsions.

5. Appareil selon la revendication 1, 2 ou 3, dans lequel les moyens de filtrage (113) comprennent des moyens pour effectuer un filtrage passe-haut du cepstre, dans le but de rejeter les composantes de cepstre variant lentement et de laisser passer les composantes de cepstre variant rapidement.

6. Appareil selon la revendication 1, 2, 3 ou 4, dans lequel les moyens de filtrage (113) comprennent un filtre passe-bas non linéaire, tel qu'un filtre de médiane, destiné à rejeter les composantes de cepstre semblables à des raies.

7. Appareil selon la revendication 1, 2, 3 ou 4, dans lequel les moyens de filtrage (113) effectuent un filtrage homomorphe avec un retard our "quéfrence" de coupure $\tau c$.

8. Appareil selon la revendication 7, dans lequel le cepstre est traité par filtrage homomorphe avec un retard ou "quéfrence" de coupure $\tau c$ fixé dans une plage de plus ou moins 50% de la valeur réciproque de la largeur de bande doublée du spectre du signal incident sous forme d'impulsions.

9. Appareil selon l'une quelconque des revendications précédentes, dans lequel les moyens destinés à extraire le caractéristique précitée comprennent des moyens (121) ayant pour fonction d'etimer la fréquence centrale d'un spectre gaussien non distordu, à partir du spectre de puissance récupéré distordu, à l'aide des indices de distorsion du spectre de puissance récupéré.

10. Appareil selon l'une quelconque des revendications précédentes, dans lequel les moyens destinés à extraire la caractéristique précitée comprennent:

des moyens (116—120) destinés à calculer les moments d'ordre zéro, du premier ordre, du second ordre, du troisième ordre et d'ordres supérieurs à partir du spectre de puissance récupéré; et

des moyens (121) destinés à calculer les indices de distorsion du spectre de puissance récupéré, tels que la fréquence centrale, la largeur de bande et l'obliquité, ces indices exprimant la distorsion et les facteurs de correction à l'aide des moments précités.

11. Appareil selon l'une quelconque des revendications précédentes, dans lequel le signal incident sous forme d'impulsions est ultrasonore, comprenant en outre:

des moyens (123) pour former une image d'une caractéristique d'un tissu biologique tel que le coefficient d'atténuation, le coefficient de réflexion et des mesures d'hétérogénéité, et des moyens pour visualiser l'image de la caractéristique conjointement et/ou en combinaison avec une image en mode B classique.

Fig. 1

Fig. 2

Fig. 3

(a)

(b)

(c)

Fig. 4

Fig. 5

Fig. 6(a)

Fig. 6(b)

Fig. 7 (a)

Fig. 7 (b)

4

Fig. 8

Fig. 9

Fig. 10